Europäisches Patentamt

European Patent Office

Office européen des brevets

(19)

(11) **EP 1 280 290 B1**

(12) **FASCICULE DE BREVET EUROPEEN**

(45) Date de publication et mention
de la délivrance du brevet:
**12.01.2005 Bulletin 2005/02**

(51) Int Cl.⁷: **H04B 10/207**, H04J 13/00,
H04K 1/02, H04B 1/707

(21) Numéro de dépôt: **02291905.4**

(22) Date de dépôt: **26.07.2002**

(54) **Réseau de communications optiques, multi-utilisateurs, reconfigurable à faible temps de latence**

Optisches rekonfigurierbares Mehrbenutzerübertragungsnetzwerk mit niedriger Latenzzeit

Optical multiuser low latency reconfigurable communications network

(84) Etats contractants désignés:
**AT BE BG CH CY CZ DE DK EE ES FI FR GB GR
IE IT LI LU MC NL PT SE SK TR**

(30) Priorité: **27.07.2001 FR 0110122**

(43) Date de publication de la demande:
**29.01.2003 Bulletin 2003/05**

(73) Titulaire: **Thales
75008 Paris (FR)**

(72) Inventeurs:
• **Pez, Mathias, Thales Intellectual Property
94117 Arcueil Cedex (FR)**
• **Barbary, Gaelle, Thales Intellectual Property
94117 Arcueil Cedex (FR)**

(56) Documents cités:
**WO-A-99/07087**          **WO-A-99/33212**
**US-A- 4 703 474**

**Description**

L'invention concerne un réseau de communications optiques multi-utilisateurs, reconfigurable à faible temps de latence, et s'applique plus particulièrement aux applications datacoms (selon l'abréviation de l'expression anglo-saxonne « data communications ») pour les communications de données à faible distance et faible nombre d'utilisateurs.

Le champ d'application d'un tel réseau est très vaste ; il s'étend du domaine médical, où le nombre d'interconnexions est grand, au domaine aérospatiale ou spatial où la nécessité d'une reconfiguration est primordiale. Ces réseaux trouvent aussi une grande part de leurs applications dans le domaine des calculateurs ou les temps de reconfiguration du réseau sont un facteur limitatif ainsi que dans la distribution de données dans les antennes radar. D'autres exemples d'applications seront décrits par la suite.

L'emploi de la lumière comme véhicule d'informations s'est généralisé car il permet de transporter une quantité d'informations considérable. La nécessité de réseaux reconfigurables rend critique le choix de l'élément de commutation. Dans l'art connu, la reconfiguration est assurée par différents moyens. On peut citer par exemple le commutateur optique, positionné sur le réseau de fibres optiques et basé sur la commutation des faisceaux optiques guidés dans les fibres soit par cristaux liquides, soit par le déplacement mécanique des fibres optiques. Mais le temps de reconfiguration élevé (quelques centaines de microsecondes à plusieurs millisecondes) rend ce système inadapté aux applications datacoms. D'autre part, il nécessite l'utilisation d'autant de fibres optiques qu'il y a d'émetteurs. L'emploi d'un commutateur électrique en amont des émetteurs permet une reconfiguration plus rapide mais nécessite autant d'émetteurs qu'il y a de combinaisons de reconfigurations, et là encore, le réseau est multifibres.

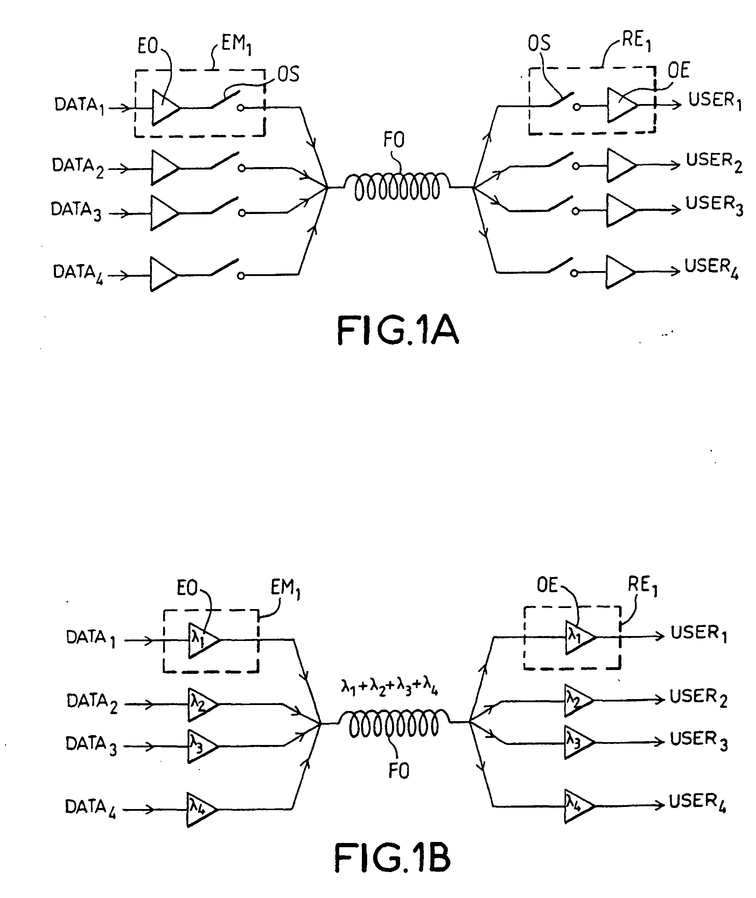

Les figures 1A et 1B décrivent deux réseaux de l'art antérieur dans lesquels le transport des faisceaux lumineux peut être assuré par une fibre optique unique. Le premier exemple (figure 1A) décrit un multiplexeur temporel (ou OTDM selon l'expression anglo-saxonne « optical time division multiple access »). Le réseau comprend un ensemble d'émetteurs $EM_i$ et de récepteurs $RE_j$. Dans la suite de la description, l'indice « i » se réfère à l'émission et l'indice « j » se réfère à la réception. Les indices i et j prennent dans cet exemple des valeurs de 1 à 4. Chaque émetteur comprend des moyens de conversion électrique/optique EO et un interrupteur optique OS. Il permet, lorsque l'interrupteur est fermé, de délivrer à partir d'un signal d'informations numériques $DATA_i$, un signal lumineux modulé en intensité transporté par des moyens de transport optique, dans cet exemple une fibre optique FO, vers des récepteurs REj, eux-mêmes formés d'un interrupteur optique OS et de moyens de conversion optique/électrique OE. Chaque récepteur est associé à un utilisateur $USER_j$. La reconfiguration se fait par gestion temporelle des interrupteurs. Ce système, simple et bas coût, présente cependant l'inconvénient d'allouer aux utilisateurs une bande passante utile réduite du fait de la division de l'espace des temps. Par ailleurs, il oblige une parfaite synchronisation entre émetteurs et récepteurs.

La figure 1 B illustre un réseau de type WDM (selon l'expression anglo-saxonne « wavelength Division Multiplexing ») dont la reconfiguration est faite en longueurs d'onde. La technologie du multiplexage en longueurs d'onde consiste à injecter dans une même fibre optique FO plusieurs signaux optiques (ou canaux) de même fréquence de modulation mais de longueurs d'onde différentes ($\lambda_i$). La reconfiguration est alors assurée par le choix de la couleur appropriée au chemin voulu. Cette technologie permet ainsi de véhiculer en même temps un grand nombre de signaux. Cependant, elle nécessite l'utilisation d'émetteurs et de récepteurs spécifiques, notés respectivement $EM_i$ et $RE_j$ sur la figure 1 B, qui disposent de l'ensemble des couleurs, par exemple grâce à l'utilisation de sources laser accordables pour les émetteurs et de filtres accordables pour les récepteurs ainsi que de composants spécifiques pour le multiplexage. L'ensemble du système se trouve de ce fait trop coûteux pour les applications datacoms.

La demande de brevet internationale WO 99/07087 décrit un réseau de communications optiques dans lequel chaque émetteur dispose d'un générateur de code pseudo-aléatoire émettant un code généré à partir d'une clé logicielle prédéterminée, des moyens de codage du signal d'informations avec ledit code pour former un signal numérique codé, une porteuse électrique RF modulée par ledit signal numérique. L'information est transportée par un faisceau optique dont l'amplitude est modulée par le signal électrique RF. En réception, le signal électrique délivré par un photodétectevr est modulée à la même fréquence que celle de la porteuse électrique puis décodé. Dans ce système, la bande passante utile du signal d'informations est limitée par la fréquence de la porteuse RF.

L'invention proposée consiste en un réseau de communications optiques multi-utilisateurs, reconfigurable à faible temps de latence, basé sur l'utilisation d'une modulation de la puissance optique d'une source d'émission multimode, directement par le signal numérique sans nécessité la modulation par une porteuse électrique, dans lequel plusieurs signaux peuvent ainsi être transmis simultanément sur un même support de transmission avec la même longueur d'onde, permettant de réduire le coût de fabrication.

Plus précisément, l'invention concerne un réseau de communications optiques, multi-utilisateurs, reconfigurable à faible temps de latence, selon la revendication 1.

La reconfiguration électrique par code avec modulation de l'intensité du signal lumineux (et non de sa phase) combine les avantages à la fois d'une grande rapidité et d'une grande simplicité de mise en oeuvre.

D'autres avantages et caractéristiques apparaîtront plus clairement à la lecture de la description qui suit, illustrée par les figures annexées qui représentent :

- les figures 1A et 1B, des schémas de principe de réseaux de communications optiques selon l'art antérieur (déjà décrites) ;
- la figure 2, un schéma de principe d'un réseau selon l'invention ;
- la figure 3, des graphiques illustrant par des exemples un code pseudo-aléatoire, sa fonction d'auto-corrélation et le codage de données à transmettre.
- Les figures 4A et 4B, des figures illustrant la réalisation de séquences de Gold respectivement par un registre à décalage simple ou par un registre à décalage double.
- La figure 5, le schéma de principe d'un émetteur d'un réseau selon l'invention ;
- La figure 6, le schéma de principe d'un récepteur d'un réseau selon l'invention ;
- La figure 7, le schéma du signal reçu par les moyens de détection selon un exemple ;
- Les figures 8A et 8B, les résultats sous forme de diagrammes de l'oeil d'une simulation d'un exemple de réseau selon l'invention pour deux utilisateurs.

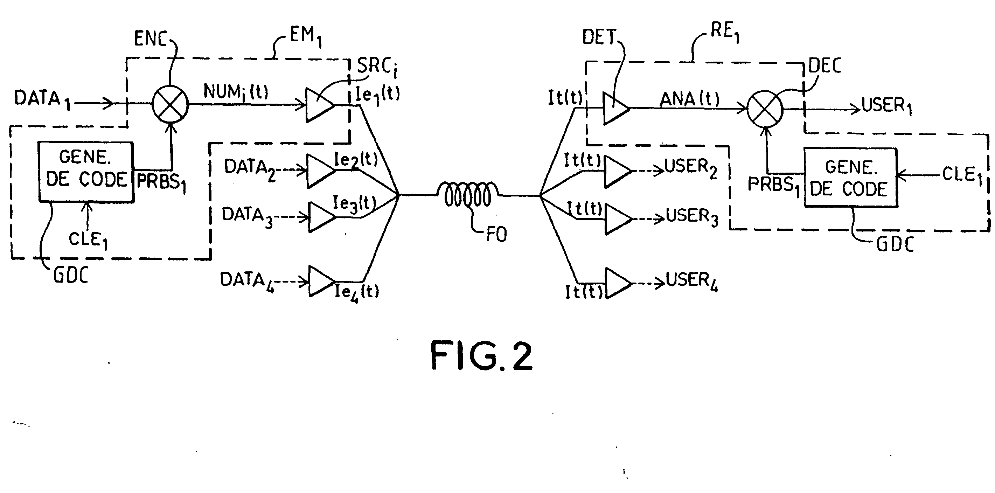

La figure 2 expose le schéma de principe du réseau de communications optiques selon l'invention.

Il comprend au moins un émetteur $EM_i$ délivrant à partir d'un signal d'informations numérique $DATA_i$ un signal lumineux modulé en intensité, des moyens de transport optique du ou desdits signaux lumineux vers au moins un récepteur $RE_j$ associé à un utilisateur $USER_j$ et établissant à partir du signal lumineux transmis le signal d'informations destiné audit utilisateur. Dans l'exemple de la figure 2, le réseau comprend 4 émetteurs et 4 récepteurs, l'indice « i » se référant à l'émission pouvant prendre des valeurs de 1 à 4 et l'indice « j » se référant à la réception pouvant également prendre des valeurs de 1 à 4. Par souci de clarté, seuls les émetteur et récepteur $EM_1$ et $RE_1$ ont été représentés. Selon l'invention, chaque émetteur comprend un générateur de code pseudo-aléatoire GDC émettant un code $PRBS_i$ généré à partir d'une clé logicielle $CLE_i$ prédéterminée, des moyens de codage ENC du signal d'informations $DATA_i$ avec le code pour former un signal numérique codé $NUM_i(t)$, des moyens d'émission lumineuse $SRC_i$ délivrant à partir du signal codé $NUM_i(t)$ un signal lumineux codé $Ie_j(t)$ correspondant, les moyens d'émission de deux émetteurs distincts étant incohérents en phase, de telle sorte que les signaux lumineux codés transmis n'interfèrent pas et que l'intensité du signal total transmis soit la somme des intensités de chacun des signaux codés émis. Chaque récepteur $RE_j$ comprend des moyens de détection directe DET du signal lumineux codé transmis $I_t(t)$ qui délivrent un signal électrique analogique ANA(t) caractéristique de la somme desdits signaux lumineux $Ie_i(t)$. Il comprend également un générateur de code pseudo-aléatoire GDC identique à celui des émetteurs et des moyens de décodage DEC dudit signal analogique au moyen d'un code $PRBS_i$ émis par ledit générateur de code avec une clé $CLE_i$ correspondante à la clé associée à l'émetteur $EM_i$ avec lequel l'utilisateur $USER_j$ souhaite dialoguer afin de restituer le signal d'informations $DATA_i$ qui lui est destiné.

Selon les applications, la clé peut être spécifique à l'émetteur, la reconfiguration du réseau se faisant au niveau des moyens de décodage DEC des récepteurs par le choix de la clé de décodage correspondant à la clé propre à chaque émetteur avec lequel l'utilisateur souhaite dialoguer, ou la clé peut être spécifique au récepteur, la reconfiguration du réseau se faisant au niveau des moyens de codage ENC u ou des émetteur(s).

Ainsi, une clé différente $CLE_i$ est attribuée par exemple à chaque émetteur $EM_i$, cette clé servant à l'établissement d'un code pseudo-aléatoire qui sera combiné aux données d'informations numériques $DATA_i$ de l'émetteur pour former le signal à transmettre $Ie_i(t)$. Ce signal est envoyé sur les moyens d'émission lumineuse $SRC_j$ qui peuvent être réalisés autour de composants commercialement disponibles. Tous les moyens d'émission de tous les émetteurs peuvent être identiques puisqu'ils utilisent la même longueur d'onde. Ils comprennent par exemple une source lumineuse multimode, par exemple une diode laser, dont la puissance optique est modulée en fonction du signal numérique codé $NUM_i(t)$. Les signaux lumineux codés sont par exemple combinés au moyen d'un coupleur optique (non représenté sur la figure 2) dans une seule fibre FO multimode. Ils peuvent également se propager dans l'air, en propagation libre.

Le dispositif de génération de la séquence pseudo-aléatoire GDC et de modulation de cette dernière par les données à transmettre peut être implémenté dans un composant numérique programmable (tel qu'un FPGA, CPLD, etc.). Il est aussi envisageable de concevoir un ASIC (Composant analogique spécifique) contenant ces différentes fonctions (analogique et numérique) afin d'intégrer cette fonctionnalité dans le module d'interconnexion optique et d'en augmenter les performances.

La réception assure le traitement inverse : un coupleur optique connecté sur la fibre optique FO permet par exemple d'envoyer le flux d'information lumineux transmis $I_t(t)$ sur les moyens de détection DET de tous les récepteurs $RE_j$. Comme l'information codée est transmise sous forme d'une modulation de l'intensité du signal lumineux, et non d'une modulation de sa phase, la détection est directe, et se fait par exemple au moyen d'une photodiode, identique pour tous les récepteurs. En passant la clé au récepteur, correspondante à celle de l'émetteur avec lequel on souhaite dialoguer, on régénère localement, au niveau du récepteur, le même code pseudo-aléatoire PRBS$_i$ que celui de l'émetteur. La combinaison de ce code local avec le signal issu du convertisseur optique/électrique formé par les moyens de détection directe DET permet de récupérer correctement les données d'informations de l'émetteur. Le dispositif réalisant la combinaison du code local et des informations reçues doit être un élément analogique capable de réaliser les fonctions de multiplication et de filtrage indispensables à la récupération des informations décodées.

Nous allons maintenant décrire plus précisément la particularité des codes utilisés, la manière de les générer et les contraintes qu'ils imposent au système. Puis nous détaillerons les modules émetteurs et récepteurs en insistant sur leurs fonctionnalités spécifiques au réseau selon l'invention.

Les codes utilisés dans le réseau reconfigurable selon l'invention sont des codes ou séquences pseudo-aléatoires, ou PRBS selon l'expression anglo-saxonne « Pseudo Random Binary Sequence » et sont constituées de séries d'éléments binaires générées par un polynôme de degré n dont l'état initial à n bits forme la clé. Certaines séquences, appelées encore séquences étalantes, présentent des propriétés d'intercorrélation et d'autocorrélation particulières qui vont permettre notamment de distinguer les différents utilisateurs. En pratique, elles peuvent être générées de manière connue, par exemple avec des registres à décalage.

Il est important de noter que ce sont les propriétés des polynômes utilisés qui nous intéressent, c'est à dire que n'importe quelle séquence présentant les bonnes propriétés convient et ces séquences peuvent toutes être générées par le même principe. Il est possible d'utiliser par exemple des M-séquences, des séquences de Gold ou de Kasami. Ces séquences sont par exemple décrites dans « Error Code Correction » (J.Wiley Editor) ou « Digital Communications » de J.Proakis (McGraw Hill Editor).

Les deux principales propriétés des séquences sur iesquelles est basé le principe du codage dans le réseau selon l'invention sont d'une part l'orthogonalité des séquences entre elles, qui permet de récupérer les informations propres à chaque utilisateur au milieu des données de tous les utilisateurs. La fonction d'intercorrélation de deux séquences orthogonales a en effet une valeur moyenne proche de zéro, le bruit dépendant de la performance des codes utilisés. D'autre part, le pic d'autocorrélation d'une séquence va pouvoir être utilisé pour synchroniser émetteur et récepteur dans le cas où les temps de propagation ne sont pas fixes ou dans le cas où le récepteur ne dispose pas d'une horloge synchrone avec celle de l'émetteur.

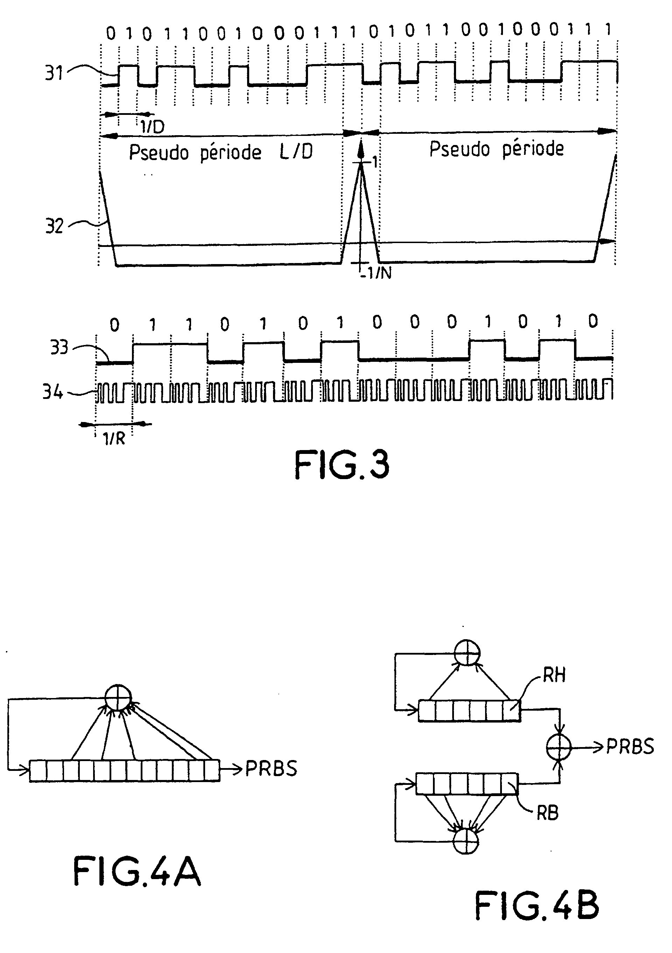

La figure 3 illustre à titre d'exemple un code pseudo-aléatoire, sa fonction d'auto-corrélation et un exemple de codage de données à transmettre. Le graphique 31 montre une séquence pseudo-aléatoire PRBS de type M-Séquence, de degré n égal à 4, c'est-à-dire dont la longueur L (ou nombre d'états) vaut $2^n-1$, soit 15 dans cet exemple. On note D le débit de la séquence PRBS. La pseudo période est défie par le rapport L/D. Comme le montre la figure 3, l'autocorrélation de la M-Séquence représentée sur le graphique 32 présente un pic de corrélation égal à 1. De même, la fonction d'intercorrélation d'une M-séquence maximale avec la somme de toutes les autres M-séquences (y compris la séquence elle-même) présente un pic de corrélation détectable malgré le bruit apporté par les autres M-séquences. Il sera donc possible d'utiliser le pic pour la synchronisation au niveau de chaque récepteur, chacun utilisant sa propre clé et ceci malgré le bruit apporté par les autres utilisateurs. Sur la figure 3, le graphique 33 donne selon un exemple de signal d'informations numérique à transmettre, de débit noté R. le graphique 34 illustre le codage du signal d'informations 33 avec la M-Séquence 31.

Une des propriétés très intéressantes du réseau selon l'invention réside dans sa modularité. Il est en effet possible comme cela est illustré ci-dessous, de privilégier le nombre d'utilisateurs ou bien le débit alloué à chaque utilisateur, tout en gardant la même structure. Pour cela, on choisit, en fonction du nombre d'utilisateurs souhaités, la famille de codes et plus précisément le degré des polynômes générateurs à utiliser.

Par exemple, pour des M-séquences, un degré n permet de générer des codes de longueur $L = 2^n-1$, et le nombre d'utilisateurs possible $N_p(n)$ est donné par la relation :

$$N_p(n) = \frac{2^n - 1}{n} \prod_{i=1}^{k} \frac{P_i - 1}{P_i} \qquad (1)$$

Où P, pour i=1,2,.....k est la décomposition en nombre premiers de $2^n-1$. Ainsi, pour n = 6, la longueur de la séquence est $L = 2^n-1 = 63$ et le nombre d'utilisateurs possible est, selon l'équation (1), $N_p(6) = 6$. Ainsi, en utilisant des M-séquences de degré 6 on peut connecter 6 utilisateurs avec des codes de longueur 63.

Pour les codes de Gold, un degré n permet $2^n+1$ utilisateurs et fournit des codes de longueur $2^n-1$. Ceci est valable si deux polynômes de longueur n sont sommés ou bien si on utilise le polynôme produit de longueur 2n. La comparaison nous montre que les codes de Gold permettent plus d'utilisateurs pour une même longueur de codes.

Nous présentons ci-après un exemple de générateur de codes de Gold de degré n = 6. On peut utiliser pour cela la paire préférentielle ci-dessous de degré n = 6 permettant de générer une famille de 65 codes de longueur 63:

$$f(x) = 1 + x + x^6$$

$$g(x) = 1 + x + x^2 + x^5 + x^6$$

Le polynôme produit est donné par f(x)g(x).Le registre à décalage correspondant peut générer 65 séquences différentes de période 63. L'intercorrélation de n'importe quelle paire de séquences possède d'excellentes propriétés, ce qui fait des codes de Gold des séquences très intéressantes.

Les figures 4A et 4B montrent par des schémas la réalisation selon l'exemple ci-dessus des séquences de Gold respectivement avec un registre à décalage unique (et un degré n = 12) et avec un registre à décalage double (n = 6), avec un registre haut RH et un registre bas RB. Ces figures montrent la simplicité de génération des codes pseudo-aléatoires. En effet, nous générons ici une famille de 65 codes, avec deux polynômes de degré 6 ou un seul de degré 12. Chaque code est obtenu par un changement de l'état initial des registres différents; pour la figure 4B, on ne modifie que l'état initial du registre du haut RH afin de générer les séquences propres à chaque utilisateur. Pour reprendre la figure 2, le générateur de code GDC correspond donc aux registres et la clé CLE$_i$ à l'état initial du registre.

Un paramètre important à prendre en compte dans la qualité ainsi que dans la capacité de la transmission du réseau selon l'invention est le facteur d'étalement F=D/R (rapport entre le débit du code D et le débit du signal d'informations R). Pour une valeur de F minimum (égal à la longueur de la PRBS), il y a une période entière de la séquence contenue dans un bit d'information, ce qui garantit les propriétés d'inter et d'autocorrélation citées précédemment. Mais si F est inférieur à cette valeur, les propriétés décrites sont altérées. C'est à dire que le pic d'autocorrélation va diminuer et la valeur moyenne d'intercorrélation va augmenter. C'est pour cette raison qu'il existe théoriquement un F$_{min}$ qui garantit une certaine qualité de transmission. Il existe donc un débit maximum fixé pour les utilisateurs qui est fonction du débit de la séquence.

Les propriétés des codes pseudo-aléatoires utilisés permettent de transmettre sur une même longueur d'onde un nombre important d'informations issues de nombreux émetteurs. Par exemple pour un rapport d'étalement grand (>1000) et des longueurs de M-séquences de 10, le nombre d'utilisateurs maximum est de 60 (voir équation (1)). Si l'on utilise des codes de Gold de degré 6, il est alors possible de connecter 65 utilisateurs avec un facteur d'étalement F d'environ 60. Le débit utile des signaux d'informations DATA$_i$ est alors fortement amélioré pour un nombre d'utilisateurs équivalent.

C'est le débit maximum auquel on peut générer la séquence étalante qui limite le système, plus exactement le débit utile des utilisateurs, et ceci en fonction du rapport d'étalement minimum. Les fréquences usuelles de modulation de la puissance des lasers sont d'environ 2 à 2,5 GHz et un rapport d'étalement de 1000 permettra donc un débit utilisateur de 2 à 2,5 MHz, tandis qu'un rapport d'étalement de 60 conduira à un débit utile de 30 à 40 MHz.

Le tableau suivant montre les capacités du réseau selon l'invention pour différentes séquences utilisées. Il y figure, pour un degré n donné, le nombre d'utilisateurs N$_p$(n) et le débit utile moyen par utilisateur. D'autres paramètres peuvent modifier les résultats mais ceci donne un aperçu des possibilités du réseau. Les débits sont calculés en considérant que le débit de la séquence étalante vaut D = 2 GHz.

Tableau 1 :

| capacités du réseau selon l'invention | | | |
|---|---|---|---|
| Nature de la clé | Degré de la séquence (n) | **Nombre d'utilisateurs** | **Débit utile (Mbits)** |
| M-séquence | 6 | **6** | **31** |
| " | 10 | **60** | **2** |
| Gold | 2 | **5** | **666** |
| " | 6 | **65** | **31** |
| " | 7 | **129** | **16** |

Ce tableau montre que la nature de la séquence influe beaucoup sur les capacités du système et permet des possibilités multiples, la reconfiguration du réseau suivant la nature de la séquence pouvant se faire facilement. Ainsi le nombre d'utilisateurs peut varier et les débits des utilisateurs peuvent être ponctuellement importants car on peut momentanément diminuer ou supprimer certains utilisateurs sur le réseau.

Un autre paramètre important du réseau selon l'invention est le temps de latence ou temps de reconfiguration.

La reconfiguration du réseau est possible dans la mesure où l'émetteur (respectivement le récepteur) connaît la clé du récepteur (respectivement de l'émetteur) avec lequel il veut dialoguer. Le temps de reconfiguration du réseau peut alors être fixe ou variable.

Si les retards de propagation sont fixes, ils peuvent être déterminés à l'avance et compensés au niveau des récepteurs. Le temps de latence pour une reconfiguration dépend alors uniquement du temps nécessaire à charger les clés dans les générateurs, ce temps est fixe et dépend de la structure du système.

Si les retards de propagation sont variables (distance entre les points connectés variable), il est alors nécessaire de synchroniser les séquences PRBS émetteur et récepteur. Il est possible d'effectuer la synchronisation en récupérant le signal d'horloge (avec un codage approprié) et en détectant le pic de corrélation entre le signal codé reçu par le décodeur et celui régénéré localement. Le temps de reconfiguration T dépend alors uniquement du rapport d'étalement.

La synchronisation a une durée maximale T égale à la longueur du code pseudo-aléatoire L divisée par son débit (T = L/D), soit la pseudo période du code (figure 3). Ainsi, pour un rapport d'étalement optimal (égal à la longueur de la PRBS), il y aura au maximum un bit de donnée de perdu. Ainsi, pour un code de Gold de degré 2 et de longueur 3, le rapport entre la période de l'horloge $T_{CLK}$ de la PRBS et celle des données est égal à 3 et le temps de latence maximal égal à $3 \times T_{CLK}$.

Plus le rapport d'étalement à débit d'information constant est grand, plus le temps de synchronisation sera faible vis-à-vis du débit des bits d'information. Et si le facteur d'étalement F reste supérieur à la longueur de la séquence étalante, alors le temps de synchronisation reste inférieur à la durée d'un bit d'information, et aucune donnée n'est perdue. La relation liant le temps de reconfiguration T et F, le rapport d'étalement, est :

$$T = \frac{(2^n-1)^2}{F} \times T_{CLK} \qquad (2)$$

La synchronisation est donc plus longue si les distances sont variables mais elle peut être réduite en augmentant le rapport d'étalement, au détriment du débit utilisateur. Dans le cas de distances fixes, elle est quasiment instantanée.

Nous décrivons maintenant les émetteurs et récepteurs en insistant sur leurs fonctionnalités spécifiques au réseau selon l'invention.

Il est important de noter dés à présent que tous les émetteurs peuvent être sensiblement identiques, ainsi que tous les récepteurs, du fait que les émetteurs peuvent travailler tous à la même longueur d'onde, du moment que les moyens d'émission lumineuse des émetteurs sont incohérents en phase. La seule différence entre deux émetteurs ou entre deux récepteurs réside dans la clé servant à la génération du code. Cette différence est donc purement logicielle.

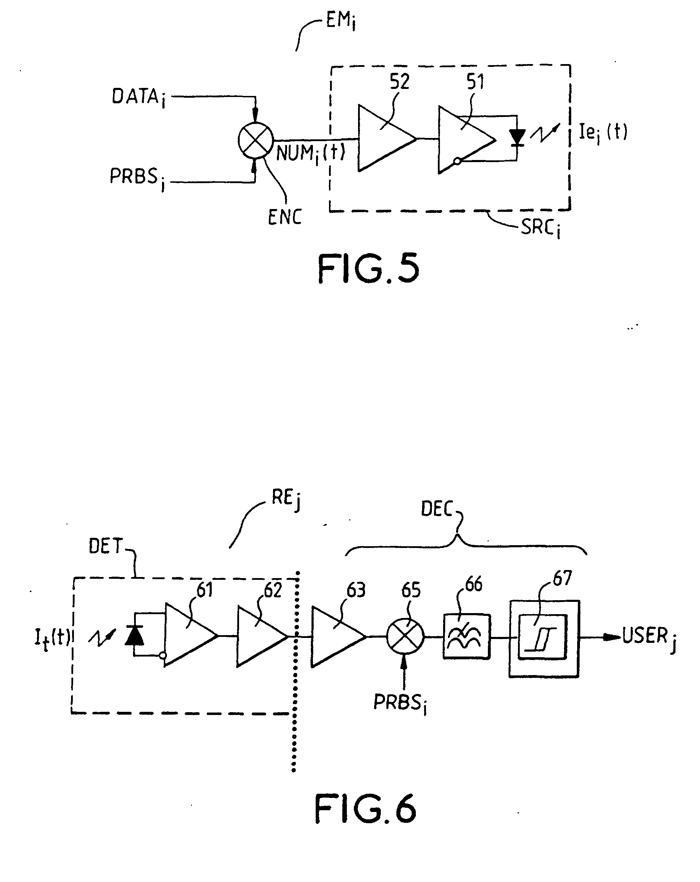

La figure 5 représente un schéma simplifié d'un émetteur $EM_i$ selon l'invention. Au niveau de l'émission, les moyens d'émission lumineuse $SRC_i$ sont formés par exemple par un module optoélectronique du commerce qui peut être utilisé sans modification pour générer le signal optique. Il peut s'agir par exemple d'une diode laser, d'une diode électroluminecente, ou plus généralement d'une source d'émission lumineuse multimode avec un étage driver 51 et un étage tampon (ou buffer) 52. Il importe que les sources d'émission des différents émetteurs soient incohérentes entre elles de telle sorte qu'il n'y ait pas d'interférences entre les signaux lumineux codés émis par les différents émetteurs et que leurs intensités puissent se sommer pour former le signal lumineux $I_t(t)$ (figure 2). Une particularité de l'émetteur réside dans le signal électrique $NUM_i(t)$ en entrée du module optoélectronique. Comme cela a été expliqué précédemment, ce signal est constitué des données étalées, c'est à dire de la séquence étalante $PRBS_i$ générée par un générateur de code (non représenté sur la figure 5), modulée par le signal d'informations numériques $DATA_i$. grâce aux moyens de codage ou encodeur ENC. La modulation consiste en une simple multiplication qui peut être réalisée par une porte XOR en numérique. La phase de codage (étalement) peut être réalisé simplement en numérique comme le montre l'exemple de la figure 3.

Notons que la figure 5 représente un schéma simplifié sur lequel ne figure pas par exemple la partie concernant l'adaptation des horloges de la séquence et des données en fonction du rapport d'étalement.

La figure 6 représente un schéma simplifié d'un récepteur $RE_j$ selon l'invention. La réception est plus délicate et nécessite des étapes particulières. Il faut pouvoir exploiter le signal optique reçu $I_t(t)$ qui comporte plusieurs niveaux de puissance puisqu'il représente la somme des signaux optiques codés émis par les différents émetteurs et transmis par les moyens de transport optique. La qualité du signal reçu et démodulé dépend de plusieurs paramètres comme notamment la sensibilité des moyens de détection DET du récepteur et le bruit apporté par la chaîne de réception. Outre les moyens de détection DET, le récepteur selon l'invention comprend des moyens de décodage DEC ou de « désétalement » du signal analogique délivré par les moyens de détection DET au moyen d'une clé correspondante à la clé associée à l'émetteur avec lequel l'utilisateur souhaite dialoguer, afin de restituer le signal d'informations qui lui est destiné. Dans l'exemple de la figure 6 , un organe de décision 67, consistant par exemple en un étage de seuillage, permet de restituer le signal d'informations en numérique.

Les moyens de détection DET comprennent par exemple une photodiode associée à un étage d'amplification transimpédance 61 et à un étage d'amplification 62. Le signal reçu issu du coupleur (non représenté sur la figure 6) a une très faible puissance (elle dépend du nombre de voies couplées) et il faut donc que la photodiode soit suffisamment sensible. Le rapport entre la dynamique maximale de la photodiode $D_{MAX}$ et le bruit d'alimentation $B_{alim}$ va déterminer le nombre de niveaux détectables et donc le nombre d'utilisateurs maximum :

$$\frac{D_{MAX}}{B_{a_{lim}}} = N_{p\ max} + 1 \qquad (3)$$

où $N_{pmax}$ est le nombre d'utilisateurs maximum.

Si les niveaux sont inférieurs au bruit d'alimentation, ils ne seront pas distingués et la décision se fera sur des plages comprenant plusieurs niveaux. Cela va se traduire par une augmentation du taux d'erreurs.

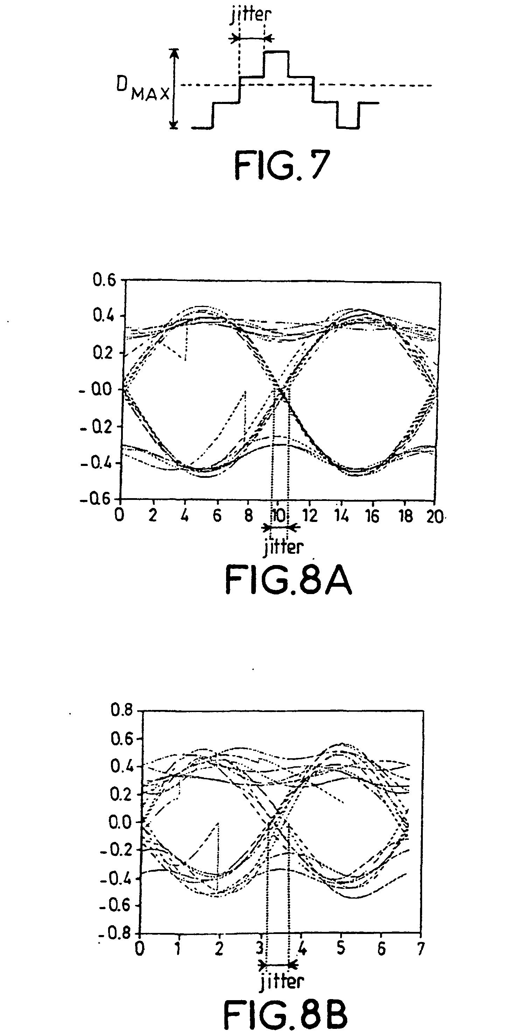

La figure 7 représente le schéma du signal reçu par la photodiode selon un exemple. Sur cette figure, la dynamique maximale est atteinte avec trois utilisateurs. Si, lors de la prise de décision, la détection se fait au niveau de la ligne pointillée, nous avons une probabilité d'erreur de 1/3 sur chaque utilisateur ; il y en a un qui n'a pas émis mais qui sera détecté comme tel et nous ne pouvons déterminé lequel. Cette incertitude sur les fronts va entraîner du jitter, dont la valeur minimale est égal à une période d'horloge de la PRBS, soit $T_{CLK}$. Sur la figure 7, le jitter est égal à $T_{CLK}$.

Il est également possible d'exprimer la relation entre les performances du système et le rapport Signal à Bruit de la photodiode par l'équation suivante :

$$\frac{J_{av}}{S_{av}} = \frac{1}{N_p - 1} \text{ soit } N_p = \frac{J_{av}}{S_{av}} + 1 \qquad (3)$$

Où $\frac{J_{av}}{S_{av}}$ est le rapport entre la somme des puissances des signaux des autres utilisateurs après décodage par le signal utile et $N_p$ le nombre d'utilisateurs. Ce rapport peut encore s'écrire :

$$10 \log\left(\frac{J_{av}}{S_{av}}\right) = 10 \log\left(\frac{D}{R}\right) - \left(\frac{E_b}{N_0}\right)_{TEB} \qquad (4)$$

Où $\frac{D}{R}$ est le facteur d'étalement et

$$\left(\frac{E_b}{N_0}\right)_{TEB}$$

l'énergie bit nécessaire pour un TEB donné (ou taux d'erreur binaire) et dépend des caractéristiques de la photodiode et de l'étage de transimpédance 61; ce sont ces deux paramètres qui nous permettront de déterminer le récepteur adéquat.

Le récepteur $RE_j$ selon l'invention ne correspond donc pas à un module de réception classique car une phase de traitement analogique spécifique à l'application est nécessaire ; il s'agit de la phase de décodage ou désétalement DEC. En effet, si l'on souhaite travailler sur plusieurs niveaux, il faut obligatoirement décoder avant l'organe de décision 67. La déposante a en effet montré que le signal est exploitable sur plusieurs niveaux mais que les propriétés des séquences sont perdues si l'on remet le signal sur deux niveaux, c'est à dire si on ne prend en compte que les niveaux extrêmes (tous les émetteurs à 1 ou tous les émetteurs à 0).

Dans l'exemple de la figure 6, les moyens de décodage DEC comprennent un étage de gain 63, un décodeur 65 et des moyens de filtrage 66. Le gain est une partie délicate car le signal a une intensité très faible et il faut l'extraire du bruit. Cette étape assure la mise en forme du signal issu de la photodiode pour ajuster son intensité à celle de la séquence utilisée pour desétaler; ceci afin d'optimiser les propriétés mathématiques des séquences. Le décodeur consiste ici en un multiplieur analogique (signal sur plusieurs niveaux) auquel on applique en entrée le signal transmis remis en forme ainsi que la séquence étalante. La sortie du multiplieur fournit le signal desétalé, c'est à dire les données de l'utilisateur $USER_j$ qu'il faut remettre en forme. On utilise pour cela un filtre passe-bas 66 qui doit être réglé selon le débit utilisateur puis un organe de décision 67.

Le principe du réseau de communications optiques selon l'invention a été validé par simulation numérique ainsi qu'au moyen d'une maquette de test et de faisabilité. Une chaîne de transmission pour deux utilisateurs a été simulée. Les résultats sont présentés sous la forme de diagrammes de l'oeil (figures 8A et 8B), qui représentent la superposition de tous les états pris par le signal sur une période d'horloge. Les calculs ont été menés avec $D_{PRBS}$=10 Mbits et $D_{data}$=0.1 Mbits (figure 8A) puis 0.3 Mbits (figure 8B), les séquences que nous utilisons sont des codes de Gold de degré 6. Le facteur d'étalement critique est donc égal à 63 et les deux diagrammes de l'oeil montrent les résultats respectivement pour un facteur d'étalement F inférieur à $F_{min}$ (figure 8B) un F supérieur à $F_{min}$.(figure 8A).

Les figures 8A et 8B ci-dessous illustrent les résultats obtenus concernant la réception des données, les diagrammes de l'oeil sont bien ouverts en réception mais nous pouvons observer du jitter qui peut être modélisé comme une instabilité des fronts et qui est de plus en plus présent en haute fréquence.

On peut donc prévoir, pour corriger le jitter, un organe supplémentaire en réception qui va permettre de restituer le signal à une cadence déterminée; par exemple un système de récupération d'horloge.

Néanmoins, les résultats sont satisfaisant et montrent que les données pourront être restituées avec un taux d'erreur faible. Le jitter est plus important lorsque le débit utilisateur ne respecte pas le $F_{min}$ (Figure 8A), mais il est possible de récupérer les données avec dégradation des performances, malgré la limite énoncée précédemment.

Les simulations ainsi réalisées ont permis de mettre en évidence la faisabilité du principe du réseau selon l'invention et son avantage sous sa forme optique, vis à vis de l'impossibilité de la réalisation électrique due aux phénomènes de battement de phase entre les porteuses électriques.

Le réseau de communications optiques ainsi décrit ouvre un champ d'applications considérables aux réseaux optiques reconfigurables. Les temps de reconfiguration du réseau sont très faibles et le fait que tous les émetteurs et les récepteurs soient identiques permet de réduire le coût de fabrication d'un tel réseau. Elle permet entre autre la réalisation de réseaux optiques asynchrones (pas besoin de synchroniser les émetteurs entre eux) reconfigurables où le nombre d'utilisateurs peut-être ajuster de façon logiciel.

La modularité du système est en outre très intéressante ; on peut en effet privilégier le nombre d'utilisateurs ou bien le débit des utilisateurs tout en conservant exactement la même structure. Ce dispositif reste aussi compatible de l'utilisation du support de transmission (fibre optique) pour une liaison très haut débit à la même longueur d'onde.

Le réseau selon l'invention peut ainsi s'appliquer selon un premier exemple à un système de distributions de données avec plusieurs émetteurs et plusieurs récepteurs. Plus précisément, des applications intéressantes peuvent se situer dans les antennes radar (les émetteurs sont formés des modules de traitement de signal et les récepteurs sont formés des modules de commande de l'antenne), ou dans le domaine médical, par exemple dans les systèmes RMN (Résonance Magnétique Nucléaire), les émetteurs sont alors formés des capteurs et les récepteurs des modules de traitement du signal. Dans ces types de réseaux, les moyens d'émission lumineuse de chaque émetteur sont avantageusement identiques et comprennent une source lumineuse multimode dont la puissance optique est modulée en fonction du signal numérique codé. Il s'agit par exemple d'une diode laser multimode ou d'une diode électroluminescente. A chaque émetteur est associée une clé logicielle $CLE_i$ spécifique, la reconfiguration du réseau se faisant au niveau des moyens de décodage des récepteurs $RE_j$ par le choix de la clé $CLE_i$ identique à la clé propre à chaque émetteur $EM_i$ avec lequel l'utilisateur $USER_j$ souhaite dialoguer.

Selon un autre exemple d'application, le réseau de communications optiques selon l'invention s'applique à un système de distributions de données entre un émetteur unique $EM_1$ et plusieurs récepteurs $RE_j$. Il s'agit par exemple dans la cabine passager d'un avion, d'un système de transmission optique en espace libre entre une borne de distribution de programmes (l'émetteur) et les récepteurs positionnés sur les sièges de l'avion. Il peut s'agir également d'un système de transmission de données en espace libre entre une borne de communication fixe (l'émetteur) et des récepteurs positionnés sur des trains. Dans ces exemples, à chaque récepteur $RE_j$ est associée une clé logicielle $CLE_j$ spécifique, la reconfiguration du réseau se faisant au niveau des moyens de codage de l'émetteur par le choix de la clé $CLE_j$ identique à la clé propre à chaque récepteur $RE_j$ dont l'utilisateur associé souhaite dialoguer avec l'émetteur $EM_1$. Dans ces exemples, la propagation du signal lumineux codé émis par l'émetteur se fait en propagation libre vers les récepteurs, permettant un réseau de communications « sans fil ». Le choix des moyens d'émission dépend de l'application. Pour les courtes distances, on pourra choisir une diode laser, par exemple en proche infrarouge. Pour les applications à plus longue distance, on pourra utiliser une lampe flash dont la puissance optique est modulée en fonction du signal numérique codé.

## Revendications

1. Réseau de communications optiques, multi-utilisateurs, reconfigurable à faible temps de latence, comprenant au moins un émetteur ($EM_i$) délivrant à partir d'un signal d'informations numérique ($DATA_i$) un signal lumineux modulé en intensité, des moyens de transport optique du ou desdits signaux lumineux vers au moins un récepteur ($RE_j$)

associé à un utilisateur (USER$_j$) et restituant à partir du signal lumineux transmis le signal d'informations destiné audit utilisateur, chaque émetteur (EM$_i$) comprenant un générateur de code pseudo-aléatoire (GDC) émettant un code (PRBS$_i$) généré à partir d'une clé logicielle prédéterminée (CLE$_i$), des moyens de codage (ENC) du signal d'informations (DATA$_i$) avec ledit code pour former un signal numérique codé (NUM$_i$(t)) et des moyens d'émission lumineuse (SRC$_i$), **caractérisé en ce que**:

- lesdits moyens d'émission lumineuse (SRC$_i$) comprennent une source lumineuse multimode dont la puissance optique est directement modulée par le signal numérique codé (NUM$_i$(t)) pour délivrer un signal lumineux codé (le$_i$(t)) correspondant, et **en ce que**

- chaque récepteur (RE$_j$) comprend des moyens de détection directe (DET) délivrant un signal électrique analogique (ANA(t)) caractéristique de la somme des signaux lumineux codés transmis, un générateur de code pseudo-aléatoire (GDC) identique à celui du ou des émetteur(s), et des moyens de décodage (DEC) dudit signal analogique au moyen d'un code (PRBS$_i$) émis par ledit générateur de code avec une clé (CLE$_i$) identique à celle associée à l'émetteur (EM$_i$) avec lequel l'utilisateur (USER$_j$) souhaite dialoguer afin de restituer le signal d'informations (DATA$_i$) qui lui est destiné.

2. Réseau de communications optiques selon la revendication 1, **caractérisé en ce que** les moyens d'émission lumineuse (SRC$_i$) de chaque émetteur sont sensiblement identiques.

3. Réseau de communications optiques selon l'une des revendications précédentes, **caractérisé en ce que** les moyens de codage (ENC) de chaque émetteur (EM$_i$) comprennent des moyens de multiplication numérique entre le signal d'informations (DATA$_i$) et le code (PRBS$_i$) généré à partir de ladite clé (CLE$_i$).

4. Réseau de communications optiques selon l'une des revendications précédentes, **caractérisé en ce que** les moyens de transport optique comprennent une fibre optique multimode (FO), un premier coupleur optique permettant de combiner dans ladite fibre les signaux lumineux (le$_i$(t)) délivrés par chacun des émetteurs (EM$_i$) et un second coupleur permettant d'envoyer l'ensemble des signaux lumineux transmis vers chacun des récepteurs (RE$_j$).

5. Réseau de communications optiques selon l'une des revendications 1 à 3, **caractérisé en ce que** le transport optique du ou des signaux lumineux codés (le$_i$(t)) s'effectue en propagation libre.

6. Réseau de communications optiques selon l'une des revendications précédentes, **caractérisé en ce que** les moyens de décodage (DEC) de chacun des récepteurs (RE$_j$) comprennent des premiers moyens de mise en forme du signal analogique (63), des moyens de multiplication analogique (65) entre ledit signal analogique mis en forme et ledit code (PRBS$_i$) afin d'obtenir un signal décodé, et des moyens de filtrage passe-bas (66) appliqués au signal décodé afin de restituer le signal d'informations.

7. Réseau de communications optiques selon la revendication 6, **caractérisé en ce que** les moyens de décodage (DEC) comprennent en outre à la suite des moyens de filtrage (66) des moyens de seuillage (67) permettant de restituer le signal d'informations en numérique.

8. Réseau de communications optiques selon l'une des revendications précédentes, **caractérisé en ce que** les codes générés par les générateurs de code pseudo-aléatoires sont de type codes de Gold.

9. Réseau de communications optiques selon l'une des revendications 1 à 7, **caractérisé en ce que** les codes générés par les générateurs de code pseudo-aléatoires sont de type M-Séquences.

10. Réseau de communications optiques selon la revendication 1 appliqué à un système de distributions de données avec plusieurs émetteurs (EM$_i$) et plusieurs récepteurs (RE$_j$), **caractérisé en ce que** les moyens d'émission lumineuse (SRC$_i$) de chaque émetteur sont sensiblement identiques et comprennent une source lumineuse multimode dont la puissance optique est modulée en fonction du signal numérique codé, et **en ce qu'**à chaque émetteur est associée une clé logicielle (CLE$_i$) spécifique, la reconfiguration du réseau se faisant au niveau des moyens de décodage (DEC) des récepteurs par le choix de la clé (CLE$_i$) identique à la clé propre à chaque émetteur (EM$_i$) avec lequel l'utilisateur (USER$_j$) souhaite dialoguer.

11. Réseau de communications optiques selon la revendication 1 appliqué à un système de distributions de données entre un émetteur (EM$_1$) et plusieurs récepteurs (RE$_j$), caractérisé en ce en ce qu'à chaque récepteur (RE$_j$) est

associée une clé logicielle (CLE$_j$) spécifique, la reconfiguration du réseau se faisant au niveau des moyens de codage (ENC) de l'émetteur par le choix de la clé (CLE$_j$) identique à la clé propre à chaque récepteur (RE$_j$) dont l'utilisateur (USER$_j$) associé souhaite dialoguer avec l'émetteur (EM$_1$).

**12.** Réseau de communications optiques selon la revendication 11, **caractérisé en ce que** la propagation du signal lumineux codé (le$_1$(t)) émis par l'émetteur (EM$_1$) se fait en propagation libre vers les récepteurs.

**13.** Réseau de communications optiques selon la revendication 12, **caractérisé en ce que** les moyens d'émission lumineuse (SRC$_1$) de l'émetteur comprennent une lampe flash dont la puissance optique est modulée en fonction du signal numérique codé.

**Patentansprüche**

**1.** Mit geringer Latenzzeit rekonfigurierbares optisches MehrbeBenutzer-Kommunikationsnetz, das mindestens einen Sender (EM$_i$), der ausgehend von einem digitalen Informationssignal (DATA$_i$) ein intensitätsmoduliertes Lichtsignal liefert, Mittel für den optischen Transport des Lichtsignals oder der Lichtsignale zu mindestens einem Empfänger (RE$_j$), der einem Benutzer (USER$_j$) zugeordnet ist und ausgehend vom übertragenen Lichtsignal das für den Benutzer bestimmte Informationssignal wiederherstellt, wobei jeder Sender (EM$_i$) einen Pseudozufallscodegenerator (GDC) aufweist, der einen Code (PRBS$_i$) sendet, der ausgehend von einem vorbestimmten Softwareschlüssel (CLE$_i$) erzeugt wird, Mittel (ENC) zum Codieren des Informationssignals (DATA$_i$) mit dem Code, um ein codiertes digitales Signal (NUM$_i$(t)) zu formen, und Lichtsendemittel (SRC$_i$) aufweist, **dadurch gekennzeichnet, dass**:

- die Lichtsendemittel (SRC$_i$) eine Multimode-Lichtquelle aufweisen, deren optische Leistung direkt vom codierten digitalen Signal (NUM$_i$(t)) moduliert wird, um ein entsprechendes codiertes Lichtsignal (Ie$_i$(t)) zu liefern, und dass
- jeder Empfänger (RE$_j$) Mittel (DET) zur direkten Erfassung, die ein analoges elektrisches Signal (ANA(t)) liefern, das für die Summe der übertragenen codierten Lichtsignale charakteristisch ist, einen Pseudozufallscodegenerator (GDC) gleich dem des Senders oder der Sender, und Decodiermittel (DEC) für das analoge Signal mittels eines Codes (PRBS$_i$) aufweist, der vom Codegenerator mit einem Schlüssel (CLE$_i$) gesendet wird, der gleich demjenigen ist, der dem Sender (EM$_i$) zugeordnet ist, mit dem der Benutzer (USER$_j$) in Dialog treten möchte, um das für ihn bestimmte Informationssignal (DATA$_i$) wiederherzustellen.

**2.** Optisches Kommunikationsnetz nach Anspruch 1, **dadurch gekennzeichnet, dass** die Lichtsendemittel (SRC$_i$) jedes Senders im Wesentlichen gleich sind.

**3.** Optisches Kommunikationsnetz nach einem der vorhergehenden Ansprüche, **dadurch gekennzeichnet, dass** die Codiermittel (ENC) jedes Senders (EM$_i$) Mittel zur digitalen Multiplikation zwischen dem Informationssignal (DATA$_i$) und dem Code (PRBS$_i$) aufweisen, der ausgehend vom Schlüssel (CLE$_i$) erzeugt wird.

**4.** Optisches Kommunikationsnetz nach einem der vorhergehenden Ansprüche, **dadurch gekennzeichnet, dass** die optischen Transportmittel eine Multimode-Lichtleitfaser (FO), einen ersten optischen Koppler, der es erlaubt, in der Faser die von jedem der Sender (EM$_i$) gelieferten Lichtsignale (Ie$_i$(t)) zu kombinieren, und einen zweiten Koppler aufweisen, der es erlaubt, die Gesamtheit, der übertragenen Lichtsignale zu jedem der Empfänger (RE$_j$) zu senden.

**5.** Optisches Kommunikationsnetz nach einem der Ansprüche 1 bis 3, **dadurch gekennzeichnet, dass** der optische Transport des codierten Lichtsignals oder der codierten Lichtsignale (Ie$_i$(t)) frei fortschreitend erfolgt.

**6.** Optisches Kommunikationsnetz nach einem der vorhergehenden Ansprüche, **dadurch gekennzeichnet, dass** die Decodiermittel (DEC) jedes der Empfänger (RE$_j$) erste Mittel zur Formung des analogen Signals (63), Mittel zur analogen Multiplikation (65) zwischen dem geformten analogen Signal und dem Code (PRBS$_i$), um ein decodiertes Signal zu erhalten, und Tiefpassfiltermittel (66) aufweisen, die an das decodierte Signal angelegt werden, um das Informationssignal wiederherzustellen.

**7.** Optisches Kommunikationsnetz nach Anspruch 6, **dadurch gekennzeichnet, dass** die Decodiermittel (DEC) weiter nach den Filtermitteln (66) Schwellwertsetzungsmittel (67) aufweisen, die es ermöglichen, das Informationssignal digital wiederzugeben.

8. Optisches Kommunikationsnetz nach einem der vorhergehenden Ansprüche, **dadurch gekennzeichnet, dass** die von den Pseudozufallscodegeneratoren erzeugten Codes vom Typ Gold-Code sind.

9. Optisches Kommunikationsnetz nach einem der Ansprüche 1 bis 7, **dadurch gekennzeichnet, dass** die von den Pseudozufallscodegeneratoren erzeugten Codes vom Typ M-Sequenz sind.

10. Optisches Kommunikationsnetz nach Anspruch 1, angewandt an ein System der Datenverteilung mit mehreren Sendern ($EM_i$) und mehreren Empfängern ($RE_j$), **dadurch gekennzeichnet, dass** die Lichtsendemittel ($SRC_i$) jedes Senders im Wesentlichen gleich sind und eine Multimode-Lichtquelle aufweisen, deren optische Leistung in Abhängigkeit vom codierten digitalen Signal moduliert wird, und dass jedem Sender ein spezifischer Software-schlüssel ($CLE_i$) zugeordnet ist, wobei die Rekonfiguration des Netzes in den Decodiermitteln (DEC) der Empfänger durch die Wahl des Schlüssels ($CLE_i$) gleich dem Schlüssel erfolgt, der zu jedem Sender ($EM_i$) gehört, mit dem der BeBenutzer ($USER_j$) in Dialog treten möchte.

11. Optisches Kommunikationsnetz nach Anspruch 1, angewandt an ein System der Datenverteilung zwischen einem Sender ($EM_1$) und mehreren Empfängern ($RE_j$), **dadurch gekennzeichnet, dass** jedem Empfänger ($RE_j$) ein spe-zifischer Softwareschlüssel ($CLE_j$) zugeordnet ist, wobei die Rekonfiguration des Netzes in den Codiermitteln (ENC) des Senders durch die Wahl des Schlüssels ($CLE_j$) gleich dem Schlüssel erfolgt, der zu jedem Empfänger ($RE_j$) gehört, dessen zugeordneter Benutzer ($USER_j$) mit dem Sender ($EM_1$) in Dialog treten möchte.

12. Optisches Kommunikationsnetz nach Anspruch 11, **dadurch gekennzeichnet, dass** die Fortpflanzung des vom Sender ($EM_1$) gesendeten codierten Lichtsignals ($Ie_1(t)$) frei fortschreitend zu den Empfängern erfolgt.

13. Optisches Kommunikationsnetz nach Anspruch 12, **dadurch gekennzeichnet, dass** die Lichtsendemittel ($SRC_1$) des Senders eine Blitzlampe enthalten, deren optische Leistung in Abhängigkeit vom codierten digitalen Signal moduliert wird.

**Claims**

1. Optical, multi-user, reconfigurable communications network with low latency time, comprising at least one sender ($EM_i$) delivering on the basis of a digital information signal ($DATA_i$) a light signal modulated in intensity, means of optical transport of the said light signal or signals to at least one receiver ($RE_j$) associated with a user ($USER_j$) and restoring on the basis of the light signal transmitted the information signal intended for the said user, each sender ($EM_i$) comprising a pseudo-random code generator (GDC) sending a code ($PRBS_i$) generated on the basis of a predetermined software key ($KEY_i$), means (ENC) for coding the information signal ($DATA_i$) with the said code so as to form a coded digital signal ($NUM_j(t)$) and means of light emission ($SRC_i$), **characterized in that**:

   - said means of light emission ($SRC_i$) comprise a multimode light source whose optical power is modulated directly by the coded digital signal ($NUM_i(t)$) so as to deliver a corresponding coded light signal ($Ie_i(t)$), and **in that**
   - each receiver ($RE_j$) comprises means of direct detection (DET) delivering an analogue electrical signal (ANA (t)) characteristic of the sum of the coded light signals transmitted, a pseudo-random code generator (GDC) identical to that of the sender or senders, and means of decoding (DEC) the said analogue signal by means of a code ($PRBS_i$) sent by the said code generator with a key ($KEY_i$) identical to that associated with the sender ($EM_i$) with which the user ($USER_j$) wishes to converse so as to restore the information signal ($DATA_i$) intended therefor.

2. Optical communications network according to Claim 1, **characterized in that** the means of light emission ($SRC_i$) of each sender are substantially identical.

3. Optical communications network according to one of the preceding claims, **characterized in that** the means of coding (ENC) of each sender ($EM_i$) comprise means of numerical multiplication between the information signal ($DATA_i$) and the code ($PRBS_i$) generated on the basis of the said key ($KEY_i$).

4. Optical communications network according to one of the preceding claims, **characterized in that** the means of optical transport comprise a multimode optical fibre (FO), a first optical coupler making it possible to combine in the said fibre the light signals ($Ie_i(t)$) delivered by each of the senders ($EM_i$) and a second coupler making it possible to dispatch all of the light signals transmitted to each of the receivers ($RE_j$).

5. Optical communications network according to one of claims 1 to 3, **characterized in that** the optical transport of the coded light signal or signals ($Ie_i(t)$) is performed in free propagation.

6. Optical communications network according to one of the preceding claims, **characterized in that** the means of decoding (DEC) of each of the receivers ($RE_j$) comprise first means of shaping of the analogue signal (63), means of analogue multiplication (65) between the said analogue signal shaped and the said code ($PRBS_i$) so as to obtain a decoded signal, and means of low-pass filtering (66) applied to the decoded signal so as to restore the information signal.

7. Optical communications network according to Claim 6, **characterized in that** the means of decoding (DEC) furthermore comprise following the filtering means (66) thresholding means (67) making it possible to restore the information signal into digital.

8. Optical communications network according to one of the preceding claims, **characterized in that** the codes generated by the pseudo-random code generators are of the Gold codes type.

9. Optical communications network according to one of Claims 1 to 7, **characterized in that** the codes generated by the pseudo-random code generators are of M-Sequences type.

10. Optical communications network according to Claim 1 applied to a system of data distributions with several senders ($EM_i$) and several receivers ($RE_j$), **characterized in that** the means of light emission ($SRC_i$) of each sender are substantially identical and comprise a multimode light source whose optical power is modulated as a function of the coded digital signal, and **in that** with each sender is associated a specific software key ($KEY_i$), the reconfiguration of the network being done at the level of the means of decoding (DEC) of the receivers through the choice of the key ($KEY_i$) identical to the key individual to each sender ($EM_i$) with which the user ($USER_j$) wishes to converse.

11. Optical communications network according to Claim 1 applied to a system of data distributions between a sender ($EM_1$) and several receivers ($RE_j$), **characterized in that** with each receiver ($RE_j$) is associated a specific software key ($KEY_j$), the reconfiguration of the network being done at the level of the means of coding (ENC) of the sender through the choice of the key ($KEY_j$) identical to the key individual to each receiver ($RE_j$) of which the associated user ($USER_j$) wishes to converse with the sender ($EM_1$).

12. Optical communications network according to Claim 11, **characterized in that** the propagation of the coded light signal ($Ie_1(t)$) emitted by the sender ($EM_1$) is done by free propagation to the receivers.

13. Optical communications network according to Claim 12, **characterized in that** the means of light emission ($SRC_1$) of the sender comprise a flash lamp whose optical power is modulated as a function of the coded digital signal.

FIG.1A

FIG.1B

FIG.2

0 1 0 1 1 0 0 1 0 0 0 1 1 1 0 1 0 1 1 0 0 1 0 0 0 1 1 1

31

1/D

Pseudo période L/D

1

Pseudo période

32

-1/N

0 1 1 0 1 0 1 0 0 0 1 0 1 0

33

34

1/R

## FIG.3

→PRBS

## FIG.4A

RH

→PRBS

RB

## FIG.4B

EM$_i$

52  51

DATA$_i$

PRBS$_i$

NUM$_i$(t)

ENC

SRC$_i$

Ie$_i$(t)

## FIG.5

RE$_j$

DET

DEC

61  62  63  65  66  67

I$_t$(t)

PRBS$_i$

USER$_j$

## FIG.6

FIG.7

FIG.8A

FIG.8B

17